# FASCICULE DE BREVET EUROPEEN

(11) **EP 2 686 200 B1**
(45) Date de publication et mention de la délivrance du brevet: **09.03.2016**
(21) Numéro de dépôt: 12708343.4
(22) Date de dépôt: 14.03.2012
(51) Int. Cl.: B60N 2/44, B60N 2/00, B60N 2/02, B64D 11/06

(54) **DISPOSITIF ET PROCÉDÉ DE COMMANDE D'UN ACTIONNEUR DE SIÈGE DANS UN VÉHICULE TEL QU'UN AVION**
VORRICHTUNG UND VERFAHREN ZUR STEUERUNG EINES SITZBETÄTIGERS IN EINEM FAHRZEUG WIE ETWA EINEM FLUGZEUG
DEVICE AND METHOD FOR CONTROLLING A SEAT ACTUATOR IN A VEHICLE SUCH AS AN AIRCRAFT

(30) Priorité: 15.03.2011 FR 1152119
(43) Date de publication de la demande: 22.01.2014
(73) Titulaire: Pga Electronic, 36130 Montierchaume (FR)
(72) Inventeur: PIAULET, Jean-François, F-36130 Deols (FR); BORDICHON, Christophe, F-36200 Le Pechereau (FR)
(74) Mandataire: Ilgart, Jean-Christophe
(86) Numéro de dépôt international: PCT/EP2012/054448
(87) Numéro de publication internationale: WO 2012/123487

(56) Documents cités:
- EP-A1- 1 228 963
- FR-A1- 2 806 674
- GB-A- 2 383 265
- US-A- 4 907 153
- US-A1- 2006 241 836

## Description

### DOMAINE TECHNIQUE

La présente invention concerne la commande d'actionneurs destinés au réglage d'éléments mobiles de sièges à réglage électrique dans les véhicules, par exemple dans les avions, mais également dans les véhicules automobiles, les trains ou les bateaux. De tels éléments mobiles peuvent être notamment un dossier, une assise, un repose-jambes, un repose-pied, un accoudoir ou encore un appui-tête.

L'invention concerne en particulier un dispositif et un procédé de commande permettant de limiter la puissance développée par un actionneur de ce type pour permettre une manoeuvre de l'actionneur dans des conditions optimales de confort et de sécurité.

### ÉTAT DE LA TECHNIQUE ANTÉRIEURE

Les sièges à réglage électrique qui équipent certains véhicules, notamment certains avions, sont habituellement pourvus de moyens de limitation de la puissance développée par le ou les actionneurs permettant le réglage de ces sièges afin de réduire les risques de blessure des passagers au cours de la manoeuvre de ces sièges.

En effet, une puissance trop élevée de ces actionneurs peut présenter un risque pour la sécurité des passagers installés sur ces sièges, en particulier en cas d'erreur de manipulation des commandes de réglage des sièges pouvant conduire à un pincement des passagers.

De ce fait, la puissance des actionneurs est en général limitée à une valeur limite maximale prédéterminée de manière à garantir des conditions de sécurité mais aussi de confort aux passagers au cours des manoeuvres des sièges.

Toutefois, si cette valeur limite de puissance peut convenir aux passagers de corpulence moyenne, le demandeur a constaté que cette valeur limite peut se révéler inadéquate en cas de passager de corpulence hors normes et/ou en cas d'inclinaison du véhicule.

En effet, la valeur limite de puissance peut alors se révéler trop faible auquel cas les manoeuvres du siège risquent d'être impossibles, ou cette valeur limite peut au contraire être trop élevée, auquel cas la sécurité du passager risque de ne plus être garantie au cours des manoeuvres du siège.

Par ailleurs, le document US 2006/241836 décrit un dispositif de commande d'un actionneur destiné au déplacement d'un élément mobile d'un siège dans un véhicule et comprenant un dispositif de mesure permettant la détermination d'un paramètre de référence relatif à un passager supporté par ledit siège.

Ce document ne décrit toutefois pas de moyens de limitation de la puissance développée par l'actionneur en fonction du paramètre de référence.

Le document FR 2 806 674 décrit un procédé de commande d'un actionneur de siège d'avion, dans lequel on compare les valeurs de l'intensité du courant alimentant l'actionneur et de sa dérivée par rapport au temps, à des valeurs seuils préenregistrées, différentes selon le sens de déplacement de l'actionneur, pour tenir compte de la contribution positive ou négative du poids de l'utilisateur selon le sens de déplacement.

Ce document ne décrit pas non plus de moyens de limitation de la puissance développée par l'actionneur en fonction d'un paramètre de référence.

### EXPOSÉ DE L'INVENTION

L'invention a notamment pour but d'apporter une solution simple, économique et efficace à ce problème.

Elle a pour objet un dispositif de commande d'un actionneur destiné au déplacement d'un élément mobile d'un siège dans un véhicule, comprenant des moyens de limitations de puissance capables d'imposer une valeur limite de la puissance développée par l'actionneur qui soit appropriée quelle que soit la corpulence du passager installé sur le siège et/ou quel que soit l'état du véhicule

L'invention propose à cet effet un dispositif de commande destiné à la commande d'au moins un actionneur destiné au déplacement d'un élément mobile d'un siège dans un véhicule, comprenant un dispositif de mesure permettant la détermination d'au moins un paramètre de référence relatif à un passager supporté par le siège et/ou relatif à l'état du véhicule, ainsi que des moyens de limitation de puissance pour définir une limite maximale de la puissance développée par l'actionneur en fonction dudit paramètre de référence.

L'invention permet ainsi d'adapter de manière optimale la limite maximale de la puissance développée par l'actionneur précité au niveau de puissance effectivement requis pour opérer un déplacement dudit élément mobile du siège dans de bonnes conditions de confort et de sécurité.

Plus précisément, l'invention permet de minimiser le risque que la puissance maximale de l'actionneur soit trop élevée, et donc le risque de blessure au cours des manoeuvres de l'actionneur pour le passager éventuellement installé sur le siège, et l'invention permet de minimiser le risque que la puissance maximale de l'actionneur soit trop faible, et donc le risque d'impossibilité à manoeuvres ledit élément mobile du siège lorsqu'un passager est installé sur celui-ci.

Bien entendu, le dispositif de commande précité peut être utilisé pour commander plusieurs actionneurs prévus pour le réglage d'un même élément mobile de siège ou de plusieurs éléments mobiles respectifs.

De plus, l'élément mobile dont il s'agit ici peut être tout type d'élément réglable destiné au support d'une partie du corps d'un passager installé sur le siège. Cet élément mobile peut notamment être un dossier, une assise, un repose-jambe, un appui-tête, un accoudoir ou encore un repose-pied.

Le dispositif de mesure comprend de préférence des moyens de mesure d'inclinaison configurés de manière à mesurer l'inclinaison du véhicule par rapport à la direction horizontale.

Les moyens de mesure d'inclinaison permettent de renseigner les moyens de limitation de puissance sur l'inclinaison du véhicule et rendent donc possible une meilleure adaptation de la limite maximale de puissance de l'actionneur déterminée par ces moyens de limitation de puissance. L'inclinaison du véhicule a en effet une influence sur la manière dont le poids du passager éventuellement installé sur le siège est repris par les différents éléments composant ce siège et donc sur le niveau des efforts que doit exercer l'actionneur pour parvenir à déplacer l'élément mobile précité dans de bonnes conditions.

En variante ou de manière complémentaire, le dispositif de mesure comprend avantageusement des moyens de mesure de poids configurés de manière à renseigner sur une composante du poids du passager précité s'exerçant à l'encontre de l'actionneur.

Les moyens de mesure de poids permettent de renseigner les moyens de limitation de puissance sur la corpulence du passager éventuellement installé sur le siège et rendent ainsi possible une adaptation en conséquence de la limite maximale de puissance développée par l'actionneur. Ainsi, cette limite maximale de puissance peut être relevée en cas de passager de corpulence relativement forte et abaissée en cas de passager de corpulence relativement faible.

Les moyens de mesure de poids précités sont avantageusement associés audit actionneur de manière à permettre une mesure directe de la composante du poids du passager s'exerçant à l'encontre de cet actionneur.

Dans ce cas, les moyens de mesure de poids mesurent directement la résistance que le passager oppose aux manoeuvres de l'actionneur, de sorte que ces moyens de mesure de poids peuvent être suffisants à eux seuls pour permettre la détermination d'une limite maximale de puissance qui soit optimale, auquel cas la présence d'un capteur d'inclinaison peut être superflue.

Dans un mode de réalisation préféré de l'invention, les moyens de mesure de poids précités sont configurés de manière à mesurer une composante du poids du passager s'exerçant selon une direction prédéterminée à l'encontre d'un composant du siège autre que ledit actionneur, et le dispositif de mesure comprend en outre des moyens de mesure d'inclinaison configurés de manière à mesurer l'inclinaison du véhicule par rapport à la direction horizontale, le dispositif de mesure étant configuré pour renseigner sur la composante du poids dudit passager s'exerçant à l'encontre de l'actionneur à partir du résultat des mesures effectuées respectivement par les moyens de mesure de poids et par les moyens de mesure d'inclinaison.

Dans ce cas, les mesures fournies respectivement par les moyens de mesure de poids et d'inclinaison sont associées de manière à obtenir un paramètre de référence représentatif des efforts que le passager oppose audit actionneur. Plus précisément, les moyens de mesure de poids renseignent sur la corpulence du passager, sans nécessairement fournir une mesure du poids réel de ce passager, et les moyens de mesure d'inclinaison renseignent sur la manière dont le poids du passager s'exerce à l'encontre de l'actionneur comme expliqué ci-dessus.

L'invention concerne également un siège pour véhicule, comprenant au moins un élément mobile et au moins un actionneur destiné au déplacement dudit élément mobile, ainsi qu'un dispositif de commande du type décrit ci-dessus pour commander ledit actionneur.

Le dispositif de commande décrit ci-dessus est en effet avantageusement intégré à un siège de véhicule. En variante, ce dispositif peut équiper un véhicule en étant structurellement indépendant d'un ou plusieurs sièges dont ce dispositif assure la commande.

L'invention concerne encore un avion, comprenant au moins un siège comportant au moins un élément mobile ainsi qu'au moins un actionneur destiné au déplacement dudit élément mobile, l'avion comprenant un dispositif de commande du type décrit ci-dessus pour commander ledit actionneur.

Comme expliqué ci-dessus, le dispositif de commande peut être intégré au siège précité ou être structurellement indépendant de celui-ci.

L'avion précité peut être équipé de plusieurs dispositifs de commande du type décrit ci-dessus pour assurer la commande de plusieurs sièges de cet avion.

Dans ce cas, certains éléments des dispositifs de commande peuvent être mutualisés, c'est-à-dire utilisés en commun par l'ensemble de ces dispositifs de commande. C'est par exemple avantageusement le cas en ce qui concerne un capteur d'inclinaison.

L'invention concerne également un procédé de commande d'un actionneur destiné au déplacement d'un élément mobile d'un siège dans un véhicule au moyen d'un dispositif de commande du type décrit ci-dessus, le procédé comprenant une étape de définition d'une limite maximale de la puissance développée par ledit actionneur en fonction du paramètre de référence déterminé par le dispositif de mesure du dispositif de commande et relatif à un passager supporté par le siège et/ou relatif à l'état du véhicule.

Ladite étape est de préférence répétée à intervalle régulier au cours de chaque manoeuvre de l'actionneur.

Ladite étape peut être éventuellement répétée à intervalle régulier en permanence, c'est-à-dire à la fois pendant les manoeuvres de l'actionneur et lorsque celui-ci se trouve au repos.

En variante, ladite étape peut être exécutée une unique fois au début de chaque manoeuvre de l'actionneur.

Cela peut être suffisant pour obtenir une valeur pertinente de la limite maximale de puissance autorisée pour l'actionneur si le véhicule connaît des variations d'inclinaison relativement lentes de sorte que le risque soit faible que la manière dont le poids du passager s'exerce à l'encontre de l'actionneur soit modifiée de manière significative au cours d'une manoeuvre de cet actionneur.

Ladite limite maximale de la puissance développée par l'actionneur est de préférence déterminée à partir d'une comparaison entre la valeur du paramètre de référence précité et une cartographie mettant en relation plusieurs plages de valeurs pour ledit paramètre de référence avec un nombre correspondant de valeurs maximales de puissance prédéterminées.

Cette cartographie comprend par exemple trois plages de valeurs du paramètre de référence, correspondant pour la première à un passager de corpulence légère et/ou à une inclinaison de l'avion telle que le siège soit penché vers l'avant, pour la deuxième à un passager de corpulence normale et à une inclinaison faible ou nulle de l'avion, et pour la troisième à un passager de forte corpulence et/ou à une inclinaison de l'avion telle que le siège soit penché vers l'arrière, et cette cartographie comprend alors en outre trois valeurs limite de puissance associées respectivement aux trois plages précitées de valeurs dudit paramètre de référence.

En variante, la cartographie peut être remplacée par une fonction mathématique mettant en correspondance une plage continue de valeurs du paramètre de référence avec une plage continue de valeurs maximales de puissance.

### BRÈVE DESCRIPTION DES DESSINS

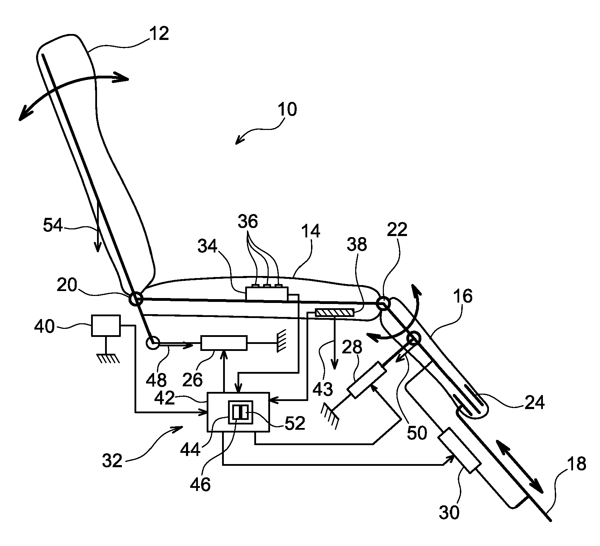

L'invention sera mieux comprise, et d'autres détails, avantages et caractéristiques de celle-ci apparaîtront à la lecture de la description suivante faite à titre d'exemple non limitatif et en référence à la figure unique illustrant un siège conforme à un mode de réalisation préféré de l'invention.

### EXPOSÉ DÉTAILLÉ DE MODES DE RÉALISATION PREFERES

La figure unique représente un siège d'avion 10 comportant un dossier 12, une assise 14, un repose-jambe 16 et un repose-pied 18.

Sur ce siège 10, le dossier 12 s'articule par un mouvement de rotation autour d'un axe 20 agencé au niveau d'un bord de l'assise 14, le repose-jambe 16 s'articule également par un mouvement de rotation autour d'un axe 22 agencé au niveau d'un bord de l'assise 14 opposé au bord précité, et le repose-pied 18 est déplaçable en translation par rapport au repose-jambe 16, comme symbolisé par la liaison 24.

Le siège 10 comprend trois actionneurs 26, 28 et 30, illustrés très schématiquement sur la figure, et dédiés respectivement au déplacement du dossier 12 et du repose-jambe 16 en rotation et au déplacement du repose-pied 18 en translation.

Le siège 10 comporte un dispositif de commande 32 comprenant un panneau de commande 34 pourvu de boutons de commande 36, un capteur de poids 38, un capteur d'inclinaison 40, et une unité de contrôle 42.

Le panneau de commande 34 est par exemple solidaire de l'assise 14 du siège 10 ou d'un châssis de ce siège (non visible sur la figure).

Le capteur de poids 38 est par exemple logé à l'intérieur de l'assise 14 de manière à mesurer la force 43 exercée sur l'assise 14 par le passager éventuellement installé sur le siège 10 du fait du poids de ce passager.

Le capteur d'inclinaison 40 et l'unité de contrôle 42 sont par exemple montés sur le châssis du siège.

Dans la terminologie de la présente invention, le capteur de poids 38 forme un moyen de mesure de poids et le capteur d'inclinaison 40 forme un moyen de mesure d'inclinaison, l'ensemble de ces capteurs formant un dispositif de mesure.

L'unité de contrôle 42 est destinée au contrôle des actionneurs 26, 28 et 30 en fonction de l'état des boutons de commande 36 du panneau de commande 34. De plus, cette unité de contrôle 42 intègre des moyens de limitation de puissance, désignés symboliquement par la référence 44 sur la figure, et destinés à limiter la puissance développée par les actionneurs 26 et 28 du dossier 12 et du repose-jambe 16 à une valeur limite en fonction des mesures fournies par le capteur de poids 38 et par le capteur d'inclinaison 40, de manière à garantir la sécurité du passager éventuellement installé sur le siège 10 lors d'une manoeuvre de ces actionneurs.

Dans l'exemple représenté sur la figure, la puissance des actionneurs précités est déterminée par l'intensité du courant électrique qui les alimente, de sorte que les moyens de limitation de puissance 44 sont configurés pour limiter l'intensité de ce courant d'alimentation des actionneurs.

Les moyens de limitation de puissance 44 intègrent un calculateur 46 configuré pour déterminer, à partir des mesures fournies par le capteur de poids 38 et par le capteur d'inclinaison 40, la valeur d'un paramètre de référence défini de manière à renseigner sur la valeur des deux composantes 48 et 50 du poids du passager qui s'exercent respectivement à l'encontre des deux actionneurs 26 et 28 précités.

D'une manière générale, le paramètre de référence précité est ainsi défini de manière à s'accroître, d'une part lorsque le poids du passager augmente, et d'autre part lorsque l'inclinaison de l'avion est telle que la force 48, 50 exercée par le passager à l'encontre de chacun des actionneurs 26 et 28 s'accroît, en l'occurrence lorsque le siège est penché vers l'arrière, et réciproquement. Il faut comprendre ici que le siège 10 est penché vers l'avant lorsque l'axe de rotation 20 du dossier 12 se trouve plus haut que l'axe de rotation 22 du repose-jambes, et inversement lorsque le siège est penché vers l'arrière.

Les moyens de limitation de puissance 44 intègrent en outre une mémoire électronique 52 dans laquelle est stockée une cartographie définissant une relation entre une série de plages de valeurs pour le paramètre de référence précité d'une part et une série de valeurs limite de puissance correspondantes d'autre part.

Cette cartographie définit par exemple trois plages de valeurs du paramètre de référence, correspondant pour la première à un passager de corpulence légère et/ou à une inclinaison de l'avion telle que le siège 10 soit penché vers l'avant, pour la deuxième à un passager de corpulence normale et à une inclinaison faible ou nulle de l'avion, et pour la troisième à un passager de forte corpulence et/ou à une inclinaison de l'avion telle que le siège 10 soit penché vers l'arrière, et cette cartographie définit en outre trois valeurs limite de puissance associées respectivement aux trois plages précitées de valeurs dudit paramètre de référence.

Le calculateur 46 est configuré de manière à définir à intervalle de temps régulier une valeur limite de courant d'alimentation pour les deux actionneurs 26 et 28 précités, correspondant à une valeur limite pour la puissance développée par ces actionneurs qui soit égale à la valeur limite de puissance correspondant à la plage de la cartographie précitée dans laquelle se trouve la valeur du paramètre de référence établie par le calculateur en fonction des mesures de poids et d'inclinaison fournies par les capteurs 38 et 40.

En fonctionnement, le calculateur 46 calcule à intervalle régulier, de préférence à une fréquence élevée de type temps-réel, la valeur du paramètre de référence précité à partir de la mesure de poids effectuée par le capteur de poids 38 et de la mesure d'inclinaison effectuée par le capteur d'inclinaison 40. Ce calculateur 46 en déduit une valeur limite de la puissance développée par les actionneurs 26 et 28 à partir de la cartographie stockée dans la mémoire électronique 52, de sorte que lors d'une manoeuvre de l'un de ces actionneurs, l'unité de contrôle 42 limite en conséquence l'intensité du courant électrique alimentant ces actionneurs.

Les moyens de limitation de puissance 44 permettent ainsi de garantir que la valeur limite de puissance précitée soit en permanence la mieux adaptée possible à la corpulence du passager et à l'inclinaison de l'avion.

Il est à noter que dans la terminologie de l'invention, le calculateur 46 fait à la fois partie du dispositif de mesure, étant donné que ce calculateur participe à la détermination du paramètre de référence précité, et des moyens de limitation de puissance, étant donné que ce calculateur participe au calcul de la limite maximale de puissance.

Dans l'exemple représenté sur la figure, le capteur de poids 38 est disposé de manière à mesurer la force 43 exercée par le passager sur l'assise 14 du fait de son poids, et cette force 43 est considérée comme étant sensiblement proportionnelle à la force 54 exercée par ce passager sur le dossier 12 et donc à la composante 48 du poids du passager exercée à l'encontre de l'actionneur 26 relié au dossier 12. Il en est de même en ce qui concerne le repose-jambe 16 et son actionneur 28.

Selon un raisonnement analogue, le capteur de poids 38 peut en variante être agencé ailleurs que dans l'assise 14, par exemple dans le dossier 12.

De plus, le dispositif de commande 32 peut comporter plusieurs capteurs de poids. Ces derniers peuvent alors être utilisés conjointement pour définir une valeur moyenne représentative du poids du passager s'exerçant sur les différents éléments du siège 10. En variante, ces capteurs de poids peuvent être utilisés indépendamment les uns des autres, auquel cas l'unité de contrôle 42 peut être configurée pour déterminer les valeurs limite de courant d'alimentation des différents actionneurs en déterminant plusieurs paramètres de référence respectifs, chacun à partir de la mesure de poids fournie par un capteur de poids correspondant.

En variante encore, le capteur de poids 38 peut être remplacé par un capteur de force directement intégré à l'un au moins des actionneurs 26 et 28, ou monté sur celui-ci, de manière à mesurer directement la composante 48 du poids du passager s'exerçant à l'encontre de l'actionneur. Dans ce cas, la présence d'un capteur d'inclinaison dans le dispositif de commande 32 peut être superflue.

De plus, le calculateur peut être configuré pour définir la valeur du paramètre de référence précité non pas à intervalle régulier comme décrit ci-dessus mais ponctuellement au début de chaque manoeuvre de l'un des actionneurs 26, 28, 30. Cela peut présenter un intérêt en termes d'économies d'énergie et de puissance de calcul, surtout lorsque l'avion équipé du siège 10 n'est pas susceptible de connaître des variations brutales d'inclinaison, ce qui est en général le cas des avions civils.

Par ailleurs, les moyens de limitation de puissance 44 peuvent en outre être configurés pour limiter également le courant d'alimentation de l'actionneur 30 du repose-pied 18, de la manière décrite ci-dessus, lorsque cela présente un intérêt.

En variante, dans le but de simplifier le dispositif de commande 32, les moyens de limitation de puissance 44 peuvent être configurés pour limiter le courant d'alimentation de l'actionneur 30 du repose-pied 18 à une valeur limite constante indépendante des mesures fournies par les capteurs 38 et 40.

En variante, toujours dans le but de simplifier le dispositif de commande 32, ce dernier peut ne pas comprendre de capteur d'inclinaison mais seulement un ou plusieurs capteurs de poids. A l'inverse, le dispositif de commande 32 peut ne pas comprendre de capteur de poids mais seulement un capteur d'inclinaison. Dans les deux cas, la valeur limite de puissance définie par les moyens de limitation de puissance risque de ne pas être optimale, bien que le risque de blessure ou de difficulté à manoeuvres le siège soit déjà considérablement réduit par comparaison aux sièges de l'art antérieur.

D'une manière générale, le dispositif de commande 32 a été décrit ci-dessus dans son application à un siège d'avion, mais ce dispositif peut bien entendu être utilisé avantageusement dans tous types de véhicule, par exemple dans les automobiles, les trains ou les bateaux.

De plus, le dispositif de commande 32 a été décrit comme étant intégré à un siège, mais un dispositif de commande 32 selon l'invention peut être structurellement indépendant du siège dont il assure la commande. En outre, certains des éléments du dispositif de commande 32, tels que son capteur d'inclinaison 40 en particulier, peuvent être mis en commun et utilisés par plusieurs dispositifs de commande selon l'invention assurant respectivement ma commande de plusieurs sièges.

## Revendications

1. Dispositif de commande (32) destiné à la commande d'au moins un actionneur (26, 28, 30) destiné au déplacement d'un élément mobile (12, 16, 18) d'un siège (10) dans un véhicule, comprenant un dispositif de mesure (38, 40) permettant la détermination d'au moins un paramètre de référence relatif à un passager supporté par ledit siège (10) et/ou relatif à l'état dudit véhicule, **caractérisé en ce qu'**il comprend en outre des moyens de limitation de puissance (44) pour définir une limite maximale de la puissance développée par ledit actionneur (26, 28, 30) en fonction dudit paramètre de référence.

2. Dispositif selon la revendication 1, **caractérisé en ce que** ledit dispositif de mesure comprend des moyens de mesure d'inclinaison (40) configurés de manière à mesurer l'inclinaison dudit véhicule par rapport à la direction horizontale.

3. Dispositif selon la revendication 1 ou 2, **caractérisé en ce que** ledit dispositif de mesure comprend des moyens de mesure de poids (38) configurés de manière à renseigner sur une composante (48, 50) du poids dudit passager s'exerçant à l'encontre dudit actionneur (26, 28).

4. Dispositif selon la revendication 3, **caractérisé en ce que** lesdits moyens de mesure de poids (38) sont associés audit actionneur (26, 28) de manière à permettre une mesure directe de ladite composante (48, 50) du poids dudit passager s'exerçant à l'encontre dudit actionneur.

5. Dispositif selon la revendication 3, **caractérisé en ce que** lesdits moyens de mesure de poids (38) sont configurés de manière à mesurer une composante (43) du poids dudit passager s'exerçant selon une direction prédéterminée à l'encontre d'un composant du siège distinct dudit actionneur (26, 28, 30), et **en ce que** ledit dispositif de mesure comprend en outre des moyens de mesure d'inclinaison (40) configurés de manière à mesurer l'inclinaison dudit véhicule par rapport à la direction horizontale, ledit dispositif de mesure étant configuré pour renseigner sur ladite composante (48, 50) du poids dudit passager s'exerçant à l'encontre dudit actionneur (26, 28) à partir du résultat des mesures effectuées respectivement par lesdits moyens de mesure de poids (38) et par lesdits moyens de mesure d'inclinaison (40).

6. Siège (10) pour véhicule, comprenant au moins un élément mobile (12, 16, 18) ainsi qu'au moins un actionneur (26, 28, 30) destiné au déplacement dudit élément mobile, **caractérisé en ce qu'**il comprend un dispositif de commande (32) selon l'une quelconque des revendications 1 à 5 pour commander ledit actionneur.

7. Avion, comprenant au moins un siège (10) comportant au moins un élément mobile (12, 16, 18) ainsi qu'au moins un actionneur (26, 28, 30) destiné au déplacement dudit élément mobile, **caractérisé en ce qu'**il comprend au moins un dispositif de commande (32) selon l'une quelconque des revendications 1 à 5 pour commander ledit actionneur.

8. Procédé de commande d'un actionneur (26, 28, 30) destiné au déplacement d'un élément mobile (12, 16, 18) d'un siège (10) dans un véhicule au moyen d'un dispositif de commande (32) selon l'une quelconque des revendications 1 à 5, ledit procédé comprenant une étape de définition d'une limite maximale de la puissance développée par ledit actionneur en fonction dudit paramètre de référence déterminé par ledit dispositif de mesure (38, 40) dudit dispositif de commande (32) et relatif à un passager supporté par ledit siège (10) et/ou relatif à l'état dudit véhicule.

9. Procédé selon la revendication 8, dans lequel ladite étape est répétée à intervalle régulier au cours de chaque manoeuvre dudit actionneur (26, 28, 30).

10. Procédé selon la revendication 8 ou 9, dans lequel ladite limite maximale de la puissance développée par ledit actionneur est déterminée à partir d'une comparaison entre la valeur dudit paramètre de référence et une cartographie mettant en relation plusieurs plages de valeurs pour ledit paramètre de référence avec un nombre correspondant de valeurs maximales de puissance prédéterminées.

## Patentansprüche

1. Steuerungsvorrichtung (32), die zur Steuerung wenigstens eines Betätigungselements (26, 28, 30) ausgelegt ist, welches zur Verlagerung eines beweglichen Elements (12, 16, 18) eines Sitzes (10) in einem Fahrzeug ausgelegt ist, umfassend eine Messvorrichtung (38, 40) zur Bestimmung wenigstens eines Referenzparameters bezüglich eines Passagiers, der von dem Sitz (10) getragen wird, und/oder bezüglich des Zustands des Fahrzeugs, **dadurch gekennzeichnet, dass** sie ferner Kraftbegrenzungsmittel (44) umfasst, um als Funktion des Referenzparameters eine Maximalgrenze der Kraft zu definieren, die von dem Betätigungselement (26, 28, 30) ausgeübt wird.

2. Vorrichtung nach Anspruch 1, **dadurch gekennzeichnet, dass** die Messvorrichtung Neigungsmessmittel (40) umfasst, die dazu ausgelegt sind, die Neigung des Fahrzeugs bezüglich der horizontalen Richtung zu messen.

3. Vorrichtung nach Anspruch 1 oder 2, **dadurch gekennzeichnet, dass** die Messvorrichtung Gewichtsmessmittel (38) umfasst, die dazu ausgelegt sind, Auskunft über eine Komponente (48, 50) des Gewichts des Passagiers zu geben, die entgegen dem Betätigungselement (26, 28) wirkt.

4. Vorrichtung nach Anspruch 3, **dadurch gekennzeichnet, dass** die Gewichtsmessmittel (38) dem Betätigungselement (26, 28) derart zugeordnet sind, dass eine direkte Messung der Komponente (48, 50) des Gewichts ermöglicht wird, die entgegen dem Betätigungselement wirkt.

5. Vorrichtung nach Anspruch 3, **dadurch gekennzeichnet, dass** die Gewichtsmessmittel (38) dazu ausgelegt sind, eine Komponente (43) des Gewichts des Passagiers zu messen, die in einer vorbestimmten Richtung gegen eine Komponente des Sitzes wirkt, die von dem Betätigungselement (26, 28, 30) verschieden ist, und dass die Messvorrichtung ferner Neigungsmessmittel (40) umfasst, die dazu ausgelegt sind, die Neigung des Fahrzeugs bezüglich der horizontalen Richtung zu messen, wobei die Messvorrichtung dazu ausgelegt ist, Information über die Komponente (48, 50) des Gewichts des Passagiers zu geben, die gegen das Betätigungselement (26, 28) wirkt, und zwar ausgehend von dem Ergebnis der Messungen, die durch die Gewichtsmessmittel (38) bzw. durch die Neigungsmessmittel (40) ausgeführt werden.

6. Sitz (10) für ein Fahrzeug, umfassend wenigstens ein bewegliches Element (12, 16, 18) sowie wenigstens ein Betätigungselement (26, 28, 30), das zur Verlagerung des beweglichen Elements ausgelegt ist, **dadurch gekennzeichnet, dass** er eine Steuerungsvorrichtung (32) nach einem der Ansprüche 1 bis 5 zum Steuern des Betätigungselements umfasst.

7. Flugzeug, umfassend wenigstens einen Sitz (10), der wenigstens ein bewegliches Element (12, 16, 18) sowie wenigstens ein Betätigungselement (26, 28, 30) umfasst, das zur Verlagerung des beweglichen Elements ausgelegt ist, **dadurch gekennzeichnet, dass** es wenigstens eine Steuerungsvorrichtung (32) nach einem der Ansprüche 1 bis 5 zur Steuerung des Betätigungselements umfasst.

8. Verfahren zum Steuern eines Betätigungselements (26, 28, 30), das zur Verlagerung eines beweglichen Elements (12, 16, 18) eines Sitzes (10) in einem Fahrzeug ausgelegt ist, mit Hilfe einer Steuerungsvorrichtung (32) nach einem der Ansprüche 1 bis 5, wobei das Verfahren einen Schritt des Definierens einer maximalen Grenze der Kraft, die durch das Betätigungselement ausgeübt wird, als Funktion des Referenzparameters umfasst, der durch die Messvorrichtung (38, 40) der Steuerungsvorrichtung (32) und bezüglich eines durch den Sitz (10) getragenen Passagiers und/oder bezüglich des Zustands des Fahrzeugs bestimmt wird.

9. Verfahren nach Anspruch 8, bei dem der Schritt im Verlauf jeder Betätigung des Betätigungselements (26, 28, 30) in gleichmäßigen Intervallen wiederholt wird.

10. Verfahren nach Anspruch 8 oder 9, bei dem die maximale Grenze der Kraft, die durch das Betätigungselement ausgeübt wird, ausgehend von einem Vergleich zwischen dem Wert des Referenzparameters und einer Kartografie bestimmt wird, die mehrere Wertebereiche für den Referenzparameter in Relation mit einer entsprechenden Zahl von vorbestimmten maximalen Kraftwerten bringt.

## Claims

1. Control device (32) for controlling at least one actuator (26, 28, 30) for moving a mobile element (12, 16, 18) of a seat (10) in a vehicle, comprising a measuring device (38, 40) for determining at least one reference parameter relating to a passenger supported by said seat (10) and/or relating to the state of said vehicle, **characterized in that** it further comprises power-limiting means (44) for defining a maximum limit for the power generated by said actuator (26, 28, 30) in accordance with said reference parameter.

2. Device according to claim 1, **characterised in that** said measuring device comprises tilt measuring means (40) configured so as to measure the tilt of said vehicle with respect to the horizontal direction.

3. Device according to claim 1 or 2, **characterised in that** said measuring device comprises weight measuring means (38) configured so as to provide information on a component (48, 50) of the weight of said passenger being exerted against said actuator (26, 28).

4. Device according to claim 3, **characterised in that** said weight measuring means (38) are associated with said actuator (26, 28) so as to enable a direct measurement of said component (48, 50) of the weight of said passenger being exerted against said actuator.

5. Device according to claim 3, **characterised in that** said weight measuring means (38) are configured so as to measure a component (43) of the weight of said passenger being exerted along a predetermined direction against a component of the seat separate from said actuator (26, 28, 30), and **in that** said measuring device further comprises tilt measuring means (40) configured so as to measure the tilt of said vehicle with respect to the horizontal direction, said measuring device being configured to provide information on said component (48, 50) of the weight of said passenger being exerted against said actuator (26, 28) from the result of the measurements carried out respectively by said weight measuring means (38) and by said tilt measuring means (40).

6. Seat (10) for vehicle, comprising at least one mobile element (12, 16, 18) as well as at least one actuator (26, 28, 30) for moving said mobile element, **characterised in that** it comprises a control device (32) according to any of claims 1 to 5 to control said actuator.

7. Aircraft, comprising at least one seat (10) comprising at least one mobile element (12, 16, 18) as well as at least one actuator (26, 28, 30) for moving said mobile element, **characterised in that** it comprises at least one control device (32) according to any of claims 1 to 5 to control said actuator.

8. Method for controlling an actuator (26, 28, 30) for moving a mobile element (12, 16, 18) of a seat (10) in a vehicle by means of a control device (32) according to any of claims 1 to 5, said method comprising a step of defining a maximum limit for the power generated by said actuator in accordance with said reference parameter determined by said measuring device (38, 40) of said control device (32) and relating to a passenger supported by said seat (10) and/or relating to the state of said vehicle.

9. Method according to claim 8, wherein said step is repeated at regular intervals during each manoeuvre of said actuator (26, 28, 30).

10. Method according to claim 8 or 9, in which said maximum limit for the power generated by said actuator is determined from a comparison between the value of said reference parameter and a mapping bringing into relation several ranges of values for said reference parameter with a corresponding number of predetermined maximum power values.
